# EUROPEAN PATENT APPLICATION

(11) **EP 1 256 888 A2**
(43) Date of publication of application: **13.11.2002**
(21) Application number: 02253094.3
(22) Date of filing: 01.05.2002
(51) Int. Cl.: G06F 17/30

(54) **System for retrieving aircraft maintenance documents**

(30) Priority: 09.05.2001 US 852167
(71) Applicant: GENERAL ELECTRIC COMPANY, Schenectady, NY 12345 (US)
(72) Inventor: Cowman, Ernie Eugene, West Chester, Ohio 45069 (US); La Blanc, Michael Robert, Wilton, New York 12831 (US)
(74) Representative: Goode, Ian Roy

(57) **Abstract**

A system for retrieving copies of paper documents. When maintenance is performed on a component of an aircraft, paper documents generally must be completed. The completed documents are digitized, and stored in a field (40) of a database record (90), which contains three other fields (43, 46, 49), which indicate: (1) the identity of the form, (2) the identity of the aircraft, and (3) the date. Also, descriptions (110) of the maintenance, the date, and the part undergoing maintenance, are entered into the configuration log (6) of the aircraft, which is separate from the database records (90). The database records (90), and the configuration log (6), are computer-searchable. The digitized documents (40) for a given part are easily retrieved, as by (1) searching the configuration log (6) for the part and thereby (2) finding the date of maintenance. The date of maintenance allows retrieval of the database record (90) containing the digitized documents (40) of interest.

## Description

The invention relates to a system for retrieving selected documents from a massive library of similar documents.

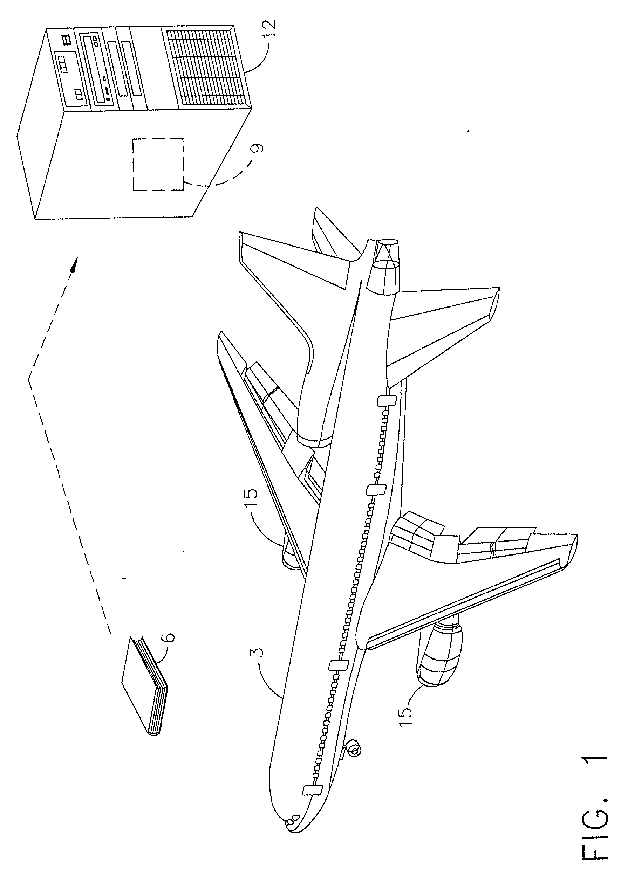

Figure 1 illustrates a commercial aircraft 3. A configuration log is kept by the operator of the aircraft 3, and is represented by logbook 6. In practice, the configuration log takes the form of a computer file, or database, 9, which is (1) stored within computer server 12, and is (2) text-searchable. However, the configuration log will be represented as a book 6, to emphasize the concept of permanent record-keeping.

Server 12 is not located within the aircraft, but, in general, within a ground-based facility (not shown) operated by the owner of the aircraft 3.

The configuration log 6 contains a list of most, if not all, components contained in the aircraft 3. For example, engines (not shown) are contained within nacelles 15. The log 6 contains a description of each engine, together with a description for many, if not all, components, or parts, within the engines.

Whenever a component undergoes maintenance, the maintenance event is recorded in the configuration log 6. For example, if a fan disc (not shown) of an engine is replaced, the fact of replacement is recorded in the configuration log 6, as well as data identifying the replacement disc. The term maintenance includes replacement, repair, testing for fitness for continued usage, and other operations performed on components.

The precision and specificity with which each component is identified within the configuration log 6 can vary from component to component. However, in general, each component is identified sufficiently, as by part number and manufacturer, so that a replacement for the component can be obtained.

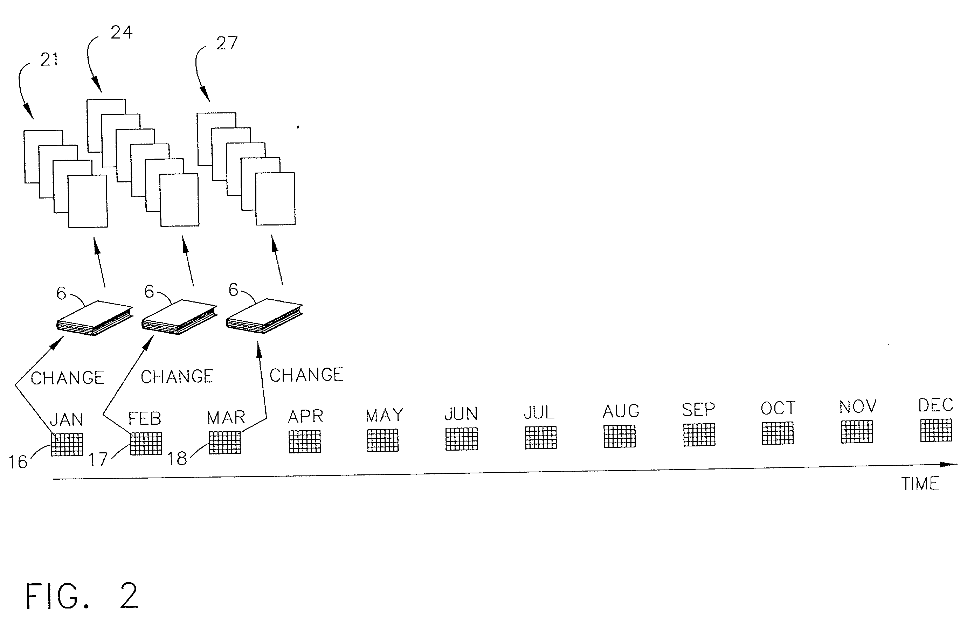

In addition to the entries made in the configuration log 6, most, if not all, maintenance events require the generation of additional documents. Figure 2 illustrates graphically the timing of three maintenance events: an event 16 in January, an event 17 February, and an event 18 in March. Each maintenance event causes a change in the configuration log 6, as indicated.

In addition, each maintenance event requires generation of respective additional documents 21, 24, and 27. These documents include specific printed paper forms required by governmental agencies, such as the Federal Aviation Agency in the United States.

These documents and forms 21, 24, and 27 contain a more detailed description of each maintenance event, compared with the configuration log 6. That is, the entries within the configuration log 6 may be viewed as summaries of maintenance events, which are described in greater detail in documents 21, 24, and 27.

A problem arises because thousands, if not tens of thousands, of paper documents are generated each year in connection with maintenance of a single aircraft 3. Government regulators require that the specific documents corresponding to any selected maintenance event be made available on-demand, for inspection, to verify that the maintenance was performed correctly. This requirement of on-demand retrieval requires that each paper document be indexed as to its location.

An index would, for example, contain a list of all components involved in a given maintenance operation, and would point to the storage location of the set of paper documents corresponding to each component maintained. A person seeking the documents for a given component would locate the component in the index, and, from there, be led to the paper documents.

Indexing of tens of thousands of documents per year, per aircraft, is expensive.

In addition, the problem is worsened because the maintenance events can occur at any location in the world, and so the paper documents can be generated anywhere in the world. Indexing documents created at a remote location incurs further expense.

The invention simplifies the task of locating the paper documents. In one form of the invention, no index is generated when the paper documents 21, 24, and 27 are generated. Rather, the configuration log is used as the index, and the configuration log leads to the documents.

For example, if component A is repaired on date D, that fact is stored in the configuration log. In addition, a database record is created which contains (1) a field identifying component A, (2) a field identifying date D, (3) a field containing a bitmap of the paper documents, and (4) other fields.

If a person seeks the paper documents for component A, the person performs a computer search of the configuration log, looking for all instances of component A. Each instance found will be associated with a date. Searching the database records for each date will locate all records relating to component A, together with the bitmaps of the paper documents.

In another embodiment, the configuration log is stored as a computer-searchable document, or database. It is emphasized that, in general, multiple configuration logs will be kept together, each for a different aircraft in a fleet of aircraft. Maintenance events cause modifications of each configuration log. Thus, new versions of the configuration log come into existence, as maintenance is undertaken. All versions are preserved, in computer-searchable form.

In addition, the detailed descriptions of the maintenance events, or paper documents, are digitized into bitmaps. Each bitmap is stored in a record, as the term record is used in database parlance. Three other items are stored within each record. One is the date of the maintenance event.

The second item is the serial number of the aircraft component involved, or an assembly of components, if an assembly is present. The third item is the number of the paper form which is digitized. Commonly, this number will be the government designation assigned to the form, but this number can be designated by the aircraft operator as well.

With this arrangement, every digitized document can be located, starting with (1) the serial number of the component maintained, (2) the date of the maintenance event, or (3) the number of the government form. The documents can be located despite the facts that (1) no index is generated for the paper documents as maintenance occurred, nor for the corresponding bitmaps and (2) the configuration logs and database records relate to multiple aircraft.

In effect, the invention provides a self-indexing system for the paper documents.

Embodiments of the invention will now be described, by way of example, with reference to the accompanying drawings, in which:
Figure 1 illustrates an aircraft 3 and its associated configuration log 6.
Figure 2 illustrates a sequence of changes which occur to the configuration log 6.
Figure 3 illustrates graphically the concept that different versions of the maintenance log 6 arise over time.
Figure 4 illustrates graphically the concept that database records are associated with each version.
Figure 5 illustrates how the versions can be used to locate bitmaps 40 of the paper documents.
Figure 6 illustrates one form of the invention.
Figure 7 is a flow chart illustrating procedures undertaken by one form of the invention.

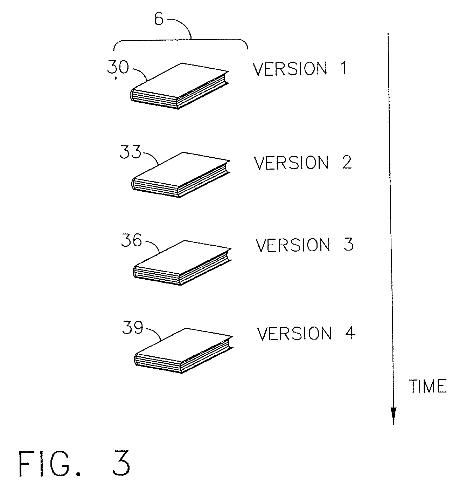

Every time the configuration log 6 is modified, a new version of the configuration log comes into existence. Figure 3 illustrates the situation graphically. As time progresses, multiple versions 30, 33, 36, and 39 of the configuration log 6 come into existence. All of these versions are kept in existence, and are stored as a text-searchable collection of data, or database.

A single maintenance event is sufficient to cause the creation of a new version. Also, if multiple events are undertaken at the same time, the multiple events will cause the creation of a new version.

For each maintenance event occurring on a component, paper documents are generated, as indicated by documents 21, 24, and 27 in Figure 2. In practice today, the documents exist as paper forms in which blanks are filled by maintenance technicians. The documents may also be generated by computer, wherein the technicians type the necessary information using a keyboard. The computer prints the paper documents.

As technology proceeds, other approaches, and other tangible media beside paper, are expected to come into existence. However, the documents possess the attribute that they are tangible, physical entities, and themselves cannot be transmitted as data, although their contents can be.

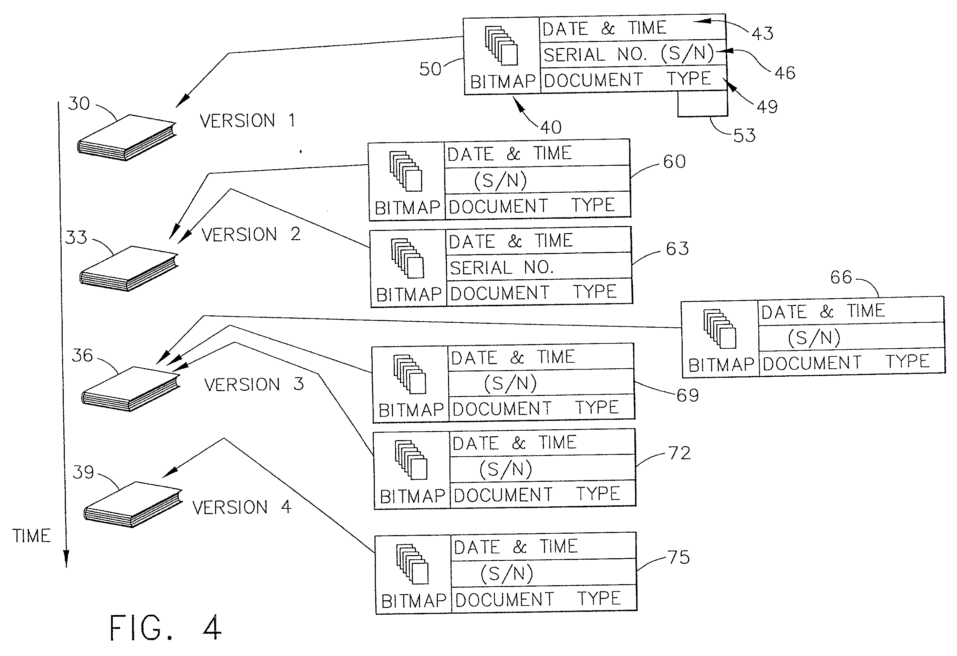

Under the invention, the documents are digitized into bitmaps, as by using an optical digitizing scanner. The bitmaps map be compressed, and one type of compression will result in a so-called vector map. The bitmaps, whether compressed or not, will be called bitmaps herein. Each bitmap, which is a file or collection of data, is stored in a record, as the term record is used in database parlance. Figure 4 illustrates several examples.

Assume that a single component was maintained, and that this component is responsible for the generation of version 1, labeled 30. The paper documents (not shown, but corresponding to documents 21, 24, or 27 in Figure 2) are digitized, and stored as bitmap 40.

The bitmap 40 is not ordinarily text-searchable, because any text contained within it is stored as a bitmap, and is thus not coded in a standard format, such as ASCII or EBCDIC. However, character recognition systems exist which can convert the bitmaps into ASCII format, or another text-searchable format. Preferably, the bitmap, as stored, is in non-text-searchable format, but the invention contemplates use of a text-searchable format as well.

In addition, three other items are stored. The first is data 43 indicating the point in time when the maintenance operation occurred. That point in time can be indicated by a calendar date, date-plus-time-of-day, or another indicator, such as the flight number of an airline.

The second item is the serial number of the component, or component assembly, on which the maintenance is performed.

Alternately, since the total number of manufacturers of commercial aircraft is rather small, another approach can be used. The manufacturer's name, model of the aircraft, and a serial number of the aircraft can be used to uniquely identify certain parts in an aircraft.

Thus, the component serial number field 46 contains data which uniquely identifies the component, or component assembly, and that data can be of several different types.

The third item 49 is the industry-standard-designation of the document which is stored as a bitmap. For example, a specific type of maintenance operation may require that a specific government form ABC be completed. The bitmap field 40 contains the completed form ABC, in its entirety, and the document-type field 49 contains the number, or designation, of the form, namely, ABC.

With this arrangement, a record 50 is generated, as the term record is used in database parlance. The record 50 contains fields 40, 43, 46, and 49. The bitmap field 40 need not be text-searchable: The bytes stored in the bitmap field 40 do not, in general, represent alphanumeric characters. However, the other fields, namely, the date field 43, the component or component assembly number field 46, and the document type field 49 are text-searchable. The bytes contained therein do represent alphanumeric characters.

An optional field 53 may be provided which specifies the location of the original paper documents from which the bitmap 40 was derived.

Three embodiments of the record 50 are specifically set forth. One, the record 50 contains fields 40, 43, 46, and 49, to the exclusion of any others. Two, the record 50 contains the fields just enumerated, namely, fields 40, 43, 46, and 49, plus field 53. Three, the record 50 contains any combination of fields 40, 43, 46, 49, 53, plus possibly others.

In Figure 4, record 50 represents a single maintenance event, and corresponds to version 1, labeled 30. Other records 60, 63, 66, 69, 72, and 75 will correspond to other maintenance events, and hence to other versions. For example, records 60 and 63 correspond to two maintenance events which occurred together, and are summarized in version 2, labeled 33. Similarly, records 66, 69, and 72 correspond to three maintenance events which occurred together, and are summarized in version 3, labeled 36. Record 75 corresponds to-a maintenance event summarized in version 4, labeled 39.

Clearly, some maintenance events can take longer than others. For example, the event represented by record 60 can begin at the time version 2 is created, but may be completed when version 4 is created. The question arises as to which version this maintenance event should be assigned. By convention, record 60 can be assigned to the later version 4. Alternately, two records 60 can be created, one for the initiation of the event, and one for the completion of the event.

However, this overlap in time of maintenance events is not critical, because the date of the summary of the event contained in the configuration log 6 will correspond to the date in the record 50 of the event. This correspondence allows one to lead to, or link, the other. Duplication within the configuration log 6 does not defeat this linkage.

The collection of all versions, such as 30, 33, 36, and 39, will be called a cumulative configuration log.

Each version is assigned a date. The date may be treated as a time period, during which the version is a valid configuration log. That is, when a new version comes into existence, the previous version acted as the valid configuration log until the new version arose. The previous version was valid for a time period, and not an instant in time. However, it is convenient to assign each version a single date, such as the date of creation, although two dates, representing a time period, can be used.

Given this arrangement, a search can be run which locates the bitmap 40 of any desired paper documents. Several examples will illustrate how a search is run.

Example 1. Assume that a newspaper reports that a pressure sensor type X has failed in a specific aircraft in a remote country. An airline owning different aircraft may inquire whether this pressure sensor X is carried by any of its aircraft.

The airline runs a search of the cumulative configuration log, using a search string which identifies the pressure sensor. The search will either find instances of the string, or not.

In the former case, one, or more, instances of the search string are found. These findings are termed hits in database parlance. In this case, the airline examines the hits, in order to ascertain whether the sensor X is presently installed. For example, the chronologically last hit may indicate that the sensor X was installed at one time, but has been removed.

The other possibility is that no hits occur, indicating that sensor X has never been installed in the aircraft corresponding to the log.

This search locates summaries of maintenance events involving sensor X, and can tell, for example, whether sensor X is presently installed in the aircraft.

Example 2. As a continuation of Example 1, assume that the airline wants to learn the detailed maintenance history of the pressure sensor X. Each hit in Example 1 will be found in a version. That version bears a date.

It is here convenient to examine the concept of versions. In another embodiment, versions are not actually used. Instead, whenever maintenance occurs, a summary of each maintenance event is added to the configuration log, together with a date of the event. But nothing is removed from the configuration log. Thus, a continuously expanding cumulative log is generated, with each maintenance event being associated with a date. In this example, each hit will be associated with one of these dates.

Thus, under the version concept, a date is assigned to a maintenance event through the date of the version containing the summary of the event. Under the direct-entry concept, the date is directly associated with the summary. In either case, the summary is dated.

A second search is run, against the date fields 43 in Figure 4, of all records 50, looking for the dates found in the first search. The hits identify the records containing the relevant bitmaps.

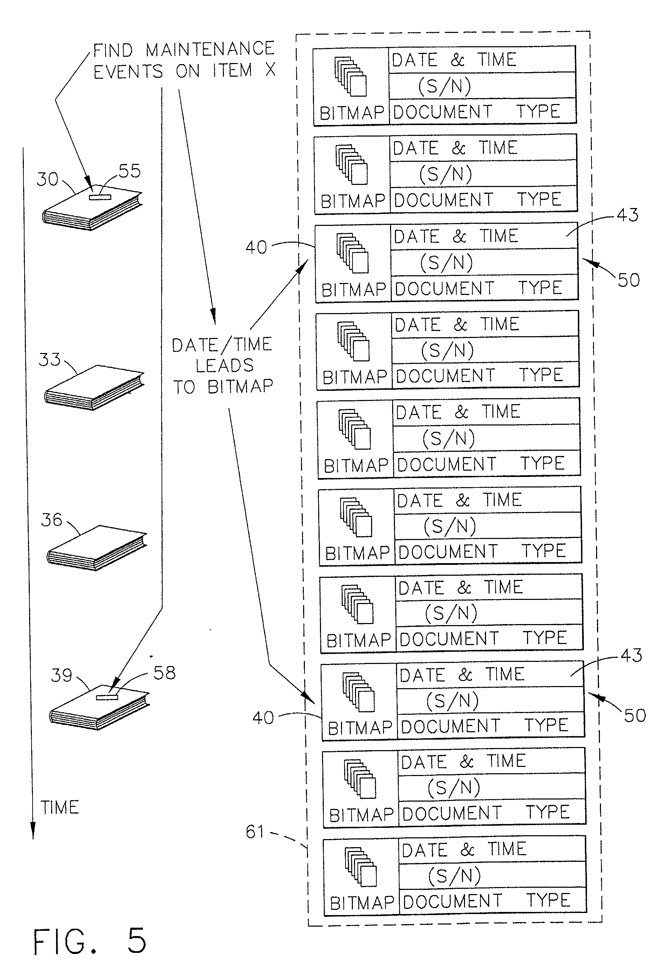

Stating the preceding in other words, the hits found in the first search identify the summaries which relate to sensor X. For example, two hits 55 and 58 in Figure 5 may have occurred. Now the detailed descriptions of the maintenance events corresponding to those hits are desired. Those descriptions are found by finding the same dates in the collection of records.

That is, each hit 55 and 58 uncovers a date: either the version date, or the date of the maintenance, depending on how the cumulative configuration log is organized. That date will also appear in the date field 43 of the records 50 describing the maintenance events corresponding to the hits 55 and 58.

A search is run against the collection 60 of records 50, looking for those two dates in the date fields 43. When records 50 are found, the bitmap-fields 40 in those records will describe the maintenance events. The transducers X in question will be mentioned, if they are involved.

Example 3. As another continuation of Example 1, assume that the airline wants to know whether a specific maintenance procedure, which requires completion of form XYZ, has been performed on any of the transducers.

The records 50 corresponding to hits 55 and 58 are located, as in Example 2. Then, the document type field 49 in Figure 4 for the two records is searched for XYZ. If either record 50 contains a bitmap of form ABC, the search will indicate that.

Example 4. The maintenance history of a specific part, such as a fan disc in a gas turbine engine, is required. A text search is run against the cumulative configuration log, in order to find all instances of that part. The hits will provide summaries of every maintenance event for that part, and thus a summary of the maintenance history for that part.

Next, the date fields 43 of the records 50 are queried for the date identified in each hit. In effect, the records 50 corresponding to each version containing a hit are sought.

The results of this search identify all records containing the bitmaps of the documents which describe the various maintenance operations involving the part.

If the part has been moved from one aircraft to another, then text searches of the cumulative configuration logs of all aircraft suspected must be undertaken.

Example 5. A government inspector wants to know how many times maintenance of part ABC has been reported on form XYZ. To find the answer, a query is run against the collection of records 60 in Figure 5, looking for XYZ in the document-type field 49. The results of this search identify all records relating to instances of form XYZ maintenance.

Next, a search is run against the cumulative configuration log, looking for (1) the dates in the records just identified and (2) part ABC.

That is, the first search identifies all records 50 involving form XYZ. Each record 50 corresponds to a version of the configuration log, although a single version may correspond to multiple records 50. Those versions are located, and are searched for a discussion of maintenance of part ABC.

Alternately, once the records 50 have been identified which contain form XYZ in their bitmaps 40, the bitmaps 40 can be searched manually for discussions of part ABC.

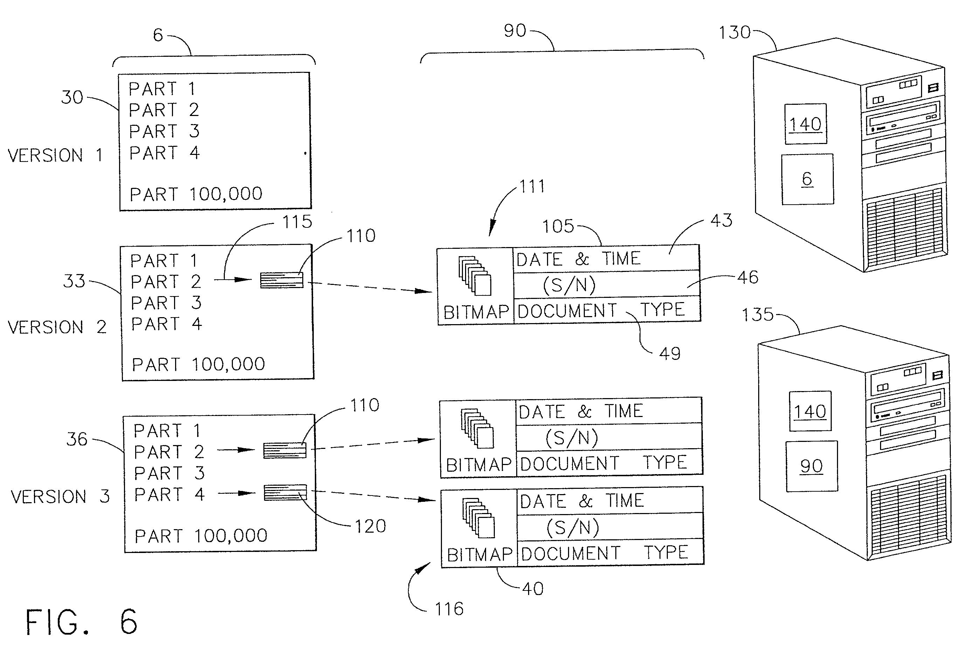

Generalized example. A new aircraft is delivered by its manufacturer. Version 1, labeled 30, in Figure 6 describes its components. No maintenance has yet occurred.

A maintenance event occurs on part number 2. Record 105 is generated, as described above. In addition, the data within three fields of the record are inserted into version 2, labeled 33. These fields are the date field 43, the component, or component assembly, serial number field 46, and the document type field 49. These three fields 43, 46, and 49 are represented by block 110, and are associated with the entry for the part maintained, part number 2, as indicated by the arrow 115. As will be seen, this creates a redundancy, which can be simplified.

Similarly, at a later time, maintenance occurs on part number 4. In version 3, labeled 36, the three fields 43, 46, and 49 of the corresponding record 116 are inserted, and associated with the entry for part 4. These three fields can be termed a sub-record, or subset, of record 116.

Under this arrangement, a subset of each record, namely, the date field 43, registration number 46, and document type 49, are associated with the corresponding entry for the part in question within the configuration log 6. Under this arrangement, each entry for a part within the configuration log 6 is directly linked with the corresponding record, such as record 116, and thus with the bitmap 40 of the paper documents. The linkage occurs through the fact that the records, such as 116, are database records, and the contents of their fields, such as fields 43, 46, and 49, can be searched, to locate records having specific field contents.

For example, the number of a maintained part will lead to a record, and thus the bitmap, by first finding the part within the configuration log, based on the number, such as part 2. Then, the associated record-subset, such as block 110, leads to the actual record 111.

As another example, a date will lead to one, or more, records, as by locating the date within block 110, for part 2. Then, the record 111 is located, as by using the same date, or other data within other fields within block 110.

However, some fields in blocks such as 110 are redundant. The registration number is a feature of the configuration log 6, and need not be inserted upon each maintenance event. Also, the date is automatically inserted when a summary is made for a maintained part. Thus, in this example, the only item which need be inserted into the configuration log 6 is the document type field 49.

In this example, the cumulative configuration log 6 is stored in a server 130, and the records 90 are stored in another server 135, although in some cases a single server can be used. Alternately, distributed storage over multiple servers can be used. Database maintenance software 140 allows a user to perform the searches described above.

When a record 50 is identified as containing bitmaps 40 of interest, copies of the bitmaps can be transmitted to a person seeking them, as by transmission over the Internet.

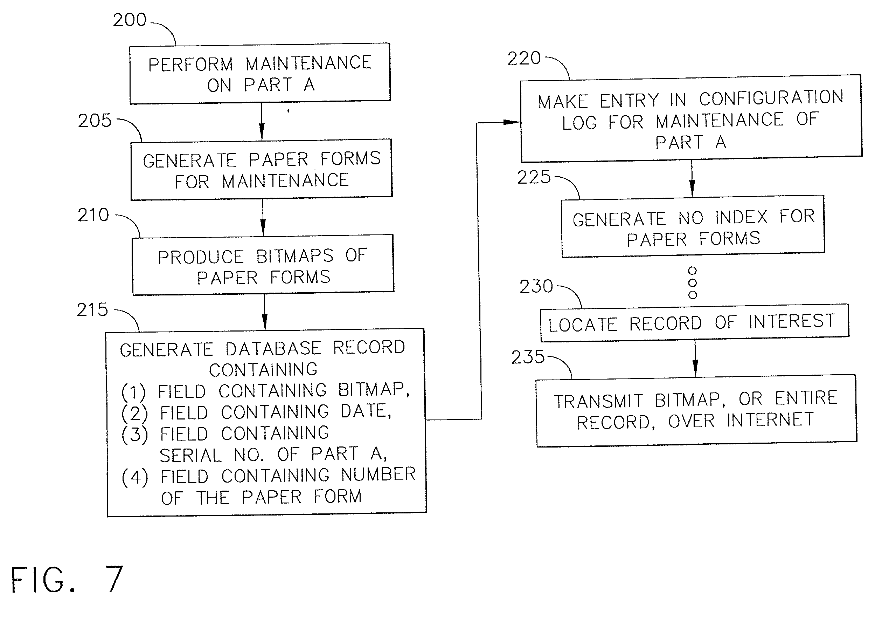

Figure 7 is a flow chart illustrating procedures undertaken by one form of the invention. Block 200 indicates that maintenance is undertaken on a part of an aircraft. Block 205 indicates that tangible forms are generated by maintenance technicians.

Block 210 indicates that the forms are scanned, to produce bitmaps. Block 215 indicates that a database record is generated, containing fields which contain (1) the bitmaps, (2) the date, (3) the registration number of the aircraft, and (4) the number, or government designation, of the tangible form.

Block 220 indicates that a description of the maintenance is inserted into the configuration log, together with a relevant date, such as the date of the maintenance. Within the configuration log, that description is associated with a description of the part maintained. Block 225 indicates that no index of the paper forms is generated.

The procedures just described are repeated, for other maintenance events.

Then, as block 230 indicates, a user locates a database record of interest. The database record is one generated by the procedure of block 215, and the database record is located, for example, through one of the search procedures described herein. Block 235 indicates that the bitmap contained in the database record, or the record in its entirety, is transmitted to the user over a network, such as the Internet. This transmission places the bitmap into the possession of the user, who can now identify a copy of the paper documents generated in block 205.

A significant feature of the invention is that, as maintenance occurs, paper forms are filled out by maintenance technicians. Bitmaps 40 in Figure 4 are generated of these forms. However, no indexing is undertaken of those forms, other than the creation of records 50 in Figure 4.

In contrast, in the prior art, an index, or table of contents, of the components upon which maintenance has been undertaken is generated. That index contains a list of each maintained components, and a location of the paper documents corresponding to each. Cross-indexes may also be generated. For extensive maintenance procedures, generating such indices can be quite time-consuming. The invention eliminates generation of such indices.

This discussion contains several terms-of-art. Suitable definitions of these terms are given immediately below. Other definitions are possible.

A configuration log contains a description of the parts, or components, which make up an aircraft. However, generic, fungible parts may not be included, such as the rivets used to connect sheet aluminum to spars. In principle, one could purchase every item contained within the log, and construct the entire aircraft.

Further, government regulations dictate the required contents of the configuration log. Different governments have different requirements as to the contents.

A database record is a building block of a database. A telephone directory provides an example of a database. The database records within this database are the individual entries, for each subscriber. For example, one record would be JACK JONES, 4343 WILLOW TERRACE, CINCINNATI, OH, (513) 444 - 6060.

A record is divided into fields. This particular record contains the following fields: (1) surname, (Jones), (2) given name (Jack), (3) street address number (4343), (4) street name (Willow Terrace), (5) city (Cincinnati), (6) state (OH), (7) area code (513), (8) telephone exchange number (444), and (9) telephone number (6060).

Therefore, a record contains fields. Known database management software, such as that indicated by block 140 in Figure 6, allows one to identify a selected field, and search that field in all records. For example, in the telephone directory, a search can be run on the street name field in all records, to find the character string Willow Terrace. The results of the search will identify all records containing the phrase Willow Terrace in the street name field.

In addition, the database management software allows one to combine searches of fields, like Boolean variables. For example, a search can seek all records having (1) Willow Terrace in the street name field, and (2) the surname Wilson in the surname field. As another example, a search can seek all records having (1) Willow Terrace in the street name field, but not (2) Cincinnati in the city field.

The contents of the fields in the records need not be alphanumeric characters. A given field may contain bitmap data, as when a document is optically scanned, and the resulting bitmap is stored in a field. Such a bitmap is not directly text-searchable. If, however, character recognition were performed on the bitmap, to convert any alphanumeric characters within the bitmap into ASCII code, or equivalent, text searching can be done on that code.

It is not strictly required that the bitmap be contained within a field of the database record. A field is searchable, and the bitmap may not be or, more precisely, any search run may produce nonsense. Instead, the bitmap may be linked to the database record, so that, once the database record is located, the bitmap is thereby also located.

Maintain is a term of art, and does not mean to merely keep in existence. It refers to the actions required to overcome the deleterious effects of the passage of time upon equipment. It refers to the actions required to keep equipment running. In a sense, the term maintain is a shorthand notation for the phrase maintain in good working order.

## Claims

1. A method, comprising:
a) performing maintenance on an aircraft (3); and
b) generating a computer-searchable database record (50) which contains
i) a description of the maintenance;
ii) the date of the maintenance.

2. Method according to claim 1, where:
i) the description is contained on a bitmap (40) copy of a government-issue form bearing a government designation.

3. Method according to claim 1, wherein the description is contained in a non-text-searchable field (40) and the date is contained in a searchable field (43).

4. A method, comprising:
a) performing maintenance on an aircraft (3);
b) generating a database record (50) which contains
i) a description (40) of the maintenance, in a format which is non-text-searchable, and
ii) date of the maintenance (43), in a text-searchable format; and
c) modifying a configuration log (6) of the aircraft (3) in accordance with the maintenance, said log (6) being text-searchable.

5. Method according to claim 4, and further comprising:
d) repeating the procedures of paragraphs (a), (b), and (c), to thereby produce
i) multiple database records (50), and
ii) multiple versions (30, 33, 36, 39) of the configuration log (6), each corresponding to a respective time period.

6. Method according to claim 5, and further comprising:
e) searching the multiple versions (30, 33, 36, 39) of the log (6) for text representing a specific component; and
f) when text is found in a version, identifying the version's time period, and searching for records (50) which match that time period, to thereby locate a description of the maintenance in the records (50).

7. A system, comprising:
a) a plurality of configuration logs (6), each
i) corresponding to a single aircraft (3);
ii) comprising multiple versions (30, 33, 36, 39), each version describing the configuration of the aircraft (3) during a respective time period;
b) a plurality of database records (50), each corresponding to a respective maintenance event, and each containing
i) a bitmap (40) of a document which describes the maintenance event;
ii) a searchable field (46) containing the registration number of the aircraft maintained; and
iii) a searchable field (43) containing the date of the maintenance event.

8. A method, comprising:
a) performing an operation upon a component of an aircraft (3);
b) placing a description of the operation on a form (21, 24, 27) which bears a form number;
c) generating a digital version (40) of the description;
d) generating a database record (50) which contains two, or more, of the following items:
i) the digital version (40),
ii) serial number of the component (46),
iii) date of the operation (43), and
iv) the form number (49).

9. Method according to claim 8, wherein the digital version is
i) displayable on a computer screen, and
ii) transmittable over a computer network.

10. Method according to claim 8, and further comprising maintaining a configuration log (6) of the aircraft (3), which contains a description of substantially all components of the aircraft (3).

11. Method according to claim 8, and further comprising generating successive versions (30, 33, 36, 39) of the configuration log (6), as maintenance events occur on the aircraft (3).
